# EUROPÄISCHE PATENTSCHRIFT

(11) **EP 1 004 105 B1**
(45) Veröffentlichungstag und Bekanntmachung des Hinweises auf die Patenterteilung: **11.12.2002**
(21) Anmeldenummer: 98949919.9
(22) Anmeldetag: 19.08.1998
(51) Int. Cl.: G05B 23/02, G08B 1/00

(54) **FEUERWEHR-LEITSTELLENSYSTEM MIT ZUMINDEST EINEM BILDSCHIRMSICHTGERÄT**
FIRE BRIGADE CENTRAL CONTROL SYSTEM COMPRISING AT LEAST ONE DISPLAY MONITOR
SYSTEME POUR POSTE DE COMMANDEMENT DE POMPIERS COMPRENANT AU MOINS UNE UNITE DE VISUALISATION

(30) Priorität: 19.08.1997 DE 19736009
(43) Veröffentlichungstag der Anmeldung: 31.05.2000
(73) Patentinhaber: SIEMENS AKTIENGESELLSCHAFT, 80333 München (DE)
(72) Erfinder: GREMSE, Christian, D-50829 Köln (DE); LÖSER, Horst, D-51465 Bergisch Gladbach (DE)
(86) Internationale Anmeldenummer: DE9802418
(87) Internationale Veröffentlichungsnummer: WO99009532

(56) Entgegenhaltungen:
- EP-A- 0 326 117
- EP-A- 0 430 716
- EP-B- 0 434 050
- WO-A-91/06960
- US-A- 5 311 562
- US-A- 5 566 271
- US-A- 5 588 109
- SIEMENS Prospekt "Rechnergestütztes Prozessinformationssystem für Kernkraftwerke PRISCA", Siemens AG, 1988, Seiten 1-16

## Beschreibung

Die vorliegende Erfindung betrifft ein Feuerwehr-Leitstellensystem mit zumindest einem Bildschirmsichtgerät gemäß Oberbegriff des Anspruchs 1.

Leitstellensysteme erfüllen Meß-, Steuerungs-, Regelungs-, Automatisierungs- und Sicherungsaufgaben verfahrens- und verwaltungstechnischer Prozesse. Derartige Leitstellensysteme werden beispielsweise für Meldesysteme, insbesondere für Gefahrenmeldesysteme zur Abwehr von Einbrüchen, Diebstahl, Sabotage und zum Schutz vor Feuer und dergleichen, eingesetzt. Eine besonders wesentliche Anwendung derartiger Systeme ist im Bereich der Feuerwehrleittechnik gegeben. Werks- und Berufsfeuerwehren nutzen derartige Systeme beispielsweise, um von einer Einsatzleitstelle - gegebenenfalls auch mehreren Einsatzleitstellen - aus unterschiedlichste Funktionen und Meldungen, also im weitesten Sinn verfahrens- und verwaltungstechnische Prozesse, zu bearbeiten. So können beispielsweise von einer entsprechenden Einsatzleitstelle einer Feuerwehr aus die für die jeweiligen Einsätze erforderlichen Maßnahmen und Möglichkeiten koordiniert und gesteuert werden. Dazu gehört selbstverständlich auch die Erfassung entsprechender Meldungen bzw. Signale.

Von verfahrenstechnischer Seite fallen dabei beispielsweise Steuersignale, zum Beispiel für automatische und/oder manuelle Alarmmelder, Sirenen, zum Öffnen von Rolltoren der Fahrzeughallen und dergleichen, von verwaltungstechnischer Seite unterschiedliche Daten, zum Beispiel hinsichtlich Personalbesetzung, Einsatzmöglichkeiten bzw. vorteilhafte Einsatzmaßnahmen, Statistiken, Einsatzkostenerfassung und dergleichen, an.
Im Feuerwehr-Leitstellensystem sind dabei eine Vielzahl von Informationen vorhanden, die zur Führung des Feuerwehr-Leitstellensystems vom Bedienpersonal erfaßt und weiterverarbeitet werden müssen. Die Führung einer Leitstelle ist eine verantwortungsvolle Aufgabe. Das Bedienpersonal muß die jederzeit unvorhersehbar auftretenden Ereignisse rational betrachten und innerhalb kürzester Zeit aus den zur Verfügung stehenden Informationen die jeweils wesentlichen erfassen und anhand dieser, gegebenenfalls nach einer weiteren Verarbeitung, geeignete Maßnahmen einleiten, veranlassen oder ausführen.

Zur Entlastung des Bedienpersonals von Routineaufgaben ist es bekannt, die Führung des Feuerwehr-Leitstellensystems in unterschiedlichen Hierarchiestufen vorzunehmen. In den Anwendungsbereichen, wo es auf die Verarbeitung von unvorhersehbaren, individuellen und gegebenenfalls konkurrierenden Ereignissen ankommt, wie beispielsweise in einem Feuerwehr-Leitstellensystem oder anderen ähnlichen Einsatzleitsystemen, reicht die Aufteilung der Aufgaben in unterschiedliche Hierarchiestufen nicht aus und kann unter Umständen eine optimale Führung des Feuerwehr-Leitstellensystems behindern. Gerade bei der Führung von Feuerwehr-Leitstellensystemen ist es - insbesondere bei konkurrierenden Ereignissen - erforderlich, daß die ereigniswesentlichen Informationen dem Bedienpersonal zum Treffen einer Entscheidung in geeigneter, leicht erfaßund verarbeitbarer Form zur Verfügung gestellt werden.

Durch die EP 0 326 117A ist eine Einrichtung zur Übertragung und Darstellung von Alärm- und Lageplänen einer Gefahrenmeldeanlage in Einsatzfahrzeugen bekannt, wobei in der Gefahrenmeldeanlage mit Komponenten der Datenverarbeitungseinrichtung die Einsatzdateien in elektronischen Speichern hinterlegt sind und über Terminals aktualisiert und ergänzt werden können. Im Falle eines Alarms werden die den Brandort beschreibenden Lage- und Einsatzpläne auf dem Bildschirm eines Sichtgerätes angezeigt.

Der vorliegenden Erfindung liegt die Aufgabe zugrunde, ein verbessertes, das Bedienpersonal in weiterem Umfang unterstützendes Feuerwehr-Leitstellensystem zur Verfügung zu stellen.

Die Lösung dieser Aufgabe gelingt durch ein Feuerwehr-Leitstellensystem gemäß Anspruch 1.

Informationen des Feuerwehr-Leitstellensystems im Sinne der vorliegenden Erfindung sind dabei sämtliche im Feuerwehr-Leitstellensystem anfallende Daten, Meldungen bzw. Signale und Steuerbefehle, beispielsweise vom Einsatzort und dergleichen, aber auch verwaltungstechnische Informationen, zum Beispiel Personaldaten, Lagerbestände, anstehende und erledigte Wartungsarbeiten, Kosten und dergleichen.

Dadurch, daß die Informationen des Feuerwehr-Leitstellensystems funktionsabhängig zusammengeführt, wenigstens teilweise aufbereitet und in diesem funktionalen Zusammenhang separat angezeigt werden, wird das Bedienpersonal bei der Bearbeitung von Meldungen zur Führung verfahrens- und verwaltungstechnischer Prozesse unterstützt. Dabei werden die Bedienpersonen bei gleichzeitig verbesserten Führungsmöglichkeiten des Feuerwehr-Leitstellensystems entlastet.

Gemäß einem Vorschlag der Erfindung werden die Informationen des Feuerwehr-Leitstellensystems automatisch in Abhängigkeit von Funktionen zusammengeführt. Dadurch kann die Bedienperson von seitens des Feuerwehr-Leitstellensystems immer wieder anfallenden Routineaufgaben und -arbeiten befreit und damit weiter entlastet werden. Im Bereich des Feuerwehr-Leitstellensystems können beispielsweise bei Eingang eines Alarms automatisch einsatzrelevante Informationen über den Einsatzort und/oder über geeignete Einsatzmaßnahmen, Einsatzpersonal, beispielsweise für den Fall entsprechend qualifiziertes Fachpersonal, und dergleichen zusammengeführt werden. In vorteilhafter Weise werden gemäß einem weiteren Vorschlag der Erfindung die Informationen manuell zusammengeführt. Dadurch besteht die Möglichkeit, daß das Bedienpersonal mehrere Meldungen eines Brandes oder dergleichen zu einem Einsatz zusammenfassen kann und so - insbesondere bei Meldungen zu verschiedenen Ereignissen - wesentlich einfacher die Übersicht behalten kann. Darüber hinaus läßt sich so besonders einfach und strukturiert ein Einsatzprotokoll bzw. -bericht erstellen.

Die im Feuerwehr-Leitstellensystem zum Zusammenführen von Informationen gegebenen Funktionen sind prinzipiell beliebig selektier- und kombinierbar. Gemäß einem besonders vorteilhaften Vorschlag der Erfindung werden die Funktionen Bearbeitung, Nachbearbeitung, statistische Auswertung, Recherche und Kostenbestimmung verwendet.

Gemäß einem besonders vorteilhaften Vorschlag der Erfindung werden die Informationen zur Aufbereitung miteinander verknüpft, so daß- bestimmte oder auswählbare Daten verbunden werden und so gemeinsam zur Verfügung stehen. Dadurch kann die Bearbeitung beschleunigt und insbesondere bei einer automatischen Verknüpfung können Fehler vermieden werden. Gemäß einem weiteren besonders vorteilhaften Vorschlag der Erfindung werden die Informationen ergänzt. Dies kann sowohl automatisch, beispielsweise aufgrund von Funktionen und dergleichen, und zum anderen manuell durch das Bedienpersonal erfolgen. So kann beispielsweise einem eingehenden manuellen, über das Telefon gemeldeten Alarm das Feuerwehr-Leitstellensystem, sofern diese Möglichkeit vorgesehen ist, die Telefonnummer selbständig erkennen oder die Bedienperson die Telefonnummer manuell erfassen.

Gemäß einem weiteren vorteilhaften Vorschlag der Erfindung werden die Informationen zur Aufbereitung weitestgehend symbolisiert, das heißt beispielsweise als Grafik dargestellt. Dadurch können entsprechend geeignete Informationen vom Bedienpersonal einfacher erfaßt und damit die Bedienung des Feuerwehr-Leitstellensystems noch weiter verbessert werden. In einer weiteren vorteilhaften Ausgestaltung der Erfindung werden die Informationen zur Aufbereitung mit Dialogelementen versehen. Diese können dabei die Informationen verknüpfend, ergänzend und/ oder symbolisierend die Kommunikation zwischen dem Bedienpersonal und dem Feuerwehr-Leitstellensystem als sogenannte Schnittstelle unterstützen und so die Bedienbarkeit des Feuerwehr-Leitstellensystems weiter verbessern.

In vorteilhafter Weise werden die aufbereiteten Informationen gemäß einem weiteren Vorschlag der Erfindung gesichert. Dadurch wird die Möglichkeit geschaffen, sämtliche Ereignisse sowie deren Bearbeitungen zu protokollieren.

Gemäß einem weiteren Vorschlag der Erfindung erfolgt die Anzeige akustisch, beispielsweise über individuelle Meldungen repräsentierende Tonfolgen, Durchsagen und dergleichen. Gemäß einem besonders vorteilhaften Vorschlag der Erfindung werden die Informationen optisch angezeigt, in besonders vorteilhafter Weise in Darstellungseinheiten wie Bildschirmsichtgeräte, Projektoren und dergleichen. Darstellungseinheiten im Sinne der vorliegenden Erfindung sind in besonders vorteilhafter Weise sogenannte Fenster oder Masken, die auf einem Bildschirm positionierbar sind. Desweiteren können zur Anzeige ebenso Drucker und dergleichen verwendet werden.

Gemäß einem weiteren Vorschlag der Erfindung werden die anzuzeigenden Informationen gruppiert. So kann beispielsweise eine in einem Feuerwehr-Leitstellensystem eingehende Alarmmeldung in einer Darstellungseinheit grafisch und in einer anderen als Text oder dergleichen dargestellt werden, während in einer weiteren Darstellungseinheit die Alarmmeldung ergänzende Informationen, beispielsweise Vorschläge für Einsatzmaßnahmen, besondere Gefahren oder dergleichen dargestellt werden. Vorteilhafterweise können die einzelnen Gruppen gemeinsam oder jeweils in einer Darstellungseinheit angezeigt werden. Die jeweiligen Informationen können so hierarchisch und in Abhängigkeit ihrer Priorität angezeigt werden und gleichzeitig von der Bedienperson entsprechend erfaßt werden.

Die Erfindung sowie weitere vorteilhafte Merkmale gemäß den Merkmalen der Unteransprüche werden im folgenden anhand der in den Fig. dargestellten Ausführungsbeispiele näher erläutert. Dabei zeigen:
- FIG 1: den prinzipiellen Aufbau eines erfindungsgemäßen Feuerwehr-Leitstellensystems;
- FIG 2: in einer Übersicht die prinzipielle Konzeption des erfindungsgemäßen Feuerwehr-Leitstellensystems und
- FIG 3: ein Beispiel für eine Anzeige entsprechend dem erfindungsgemäßen Feuerwehr-Leitstellensystems.

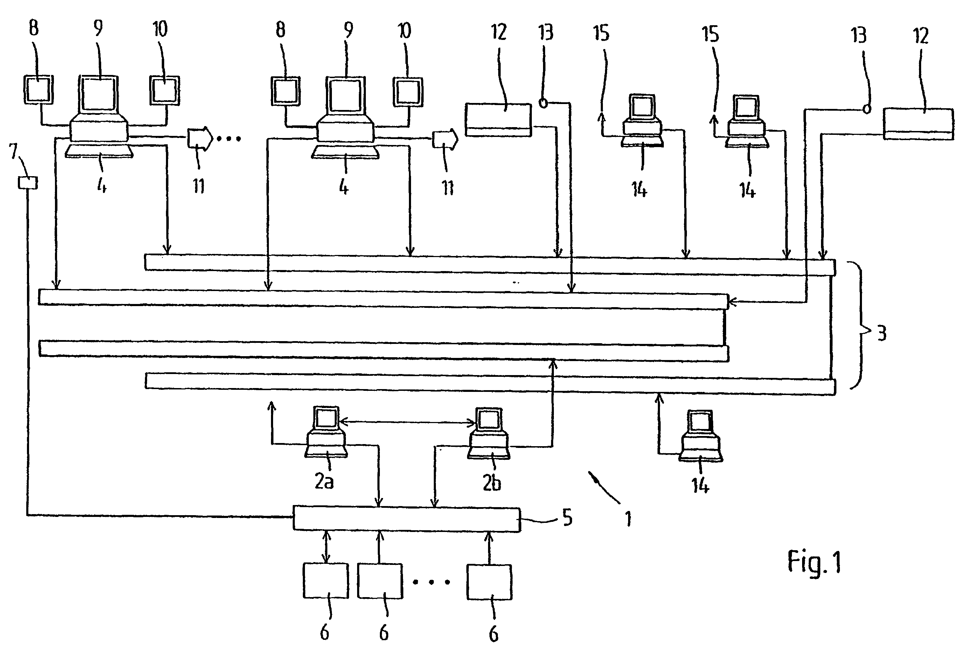

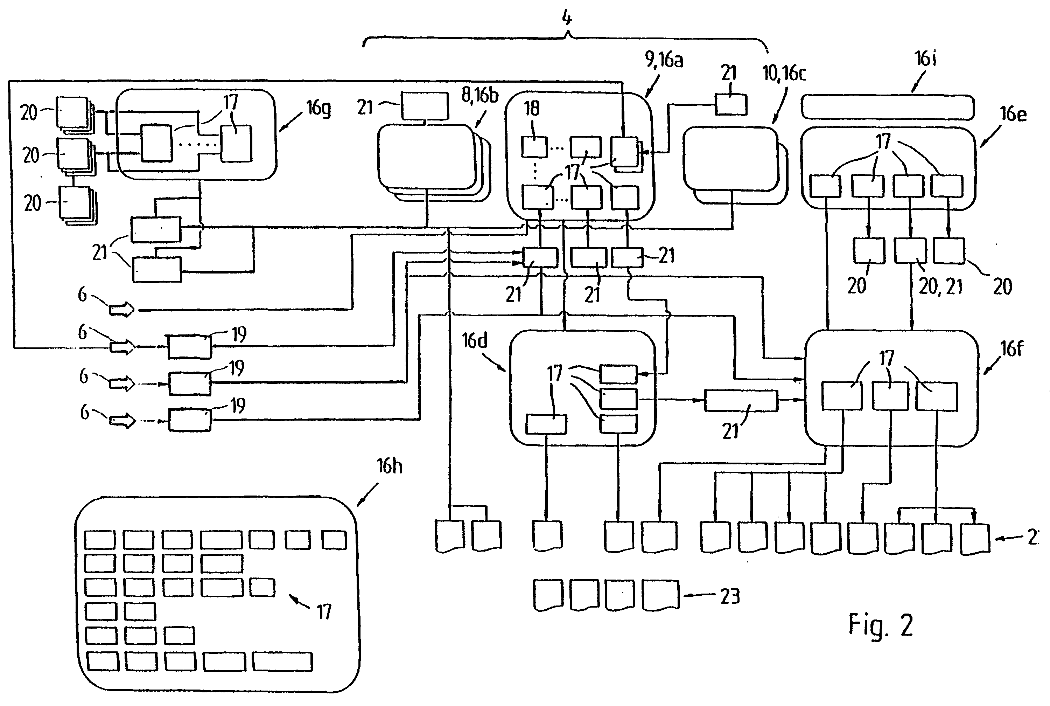

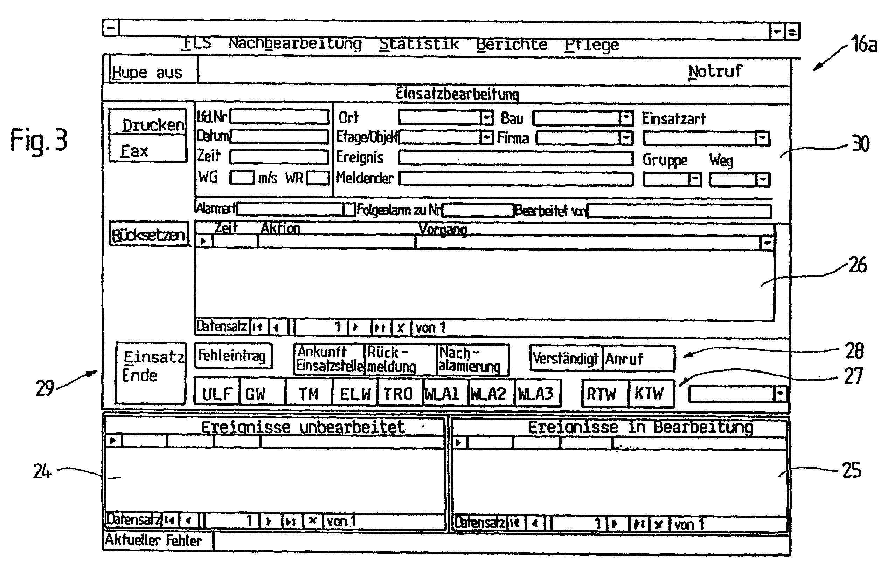

FIG 1 zeigt den prinzipiellen Aufbau eines Feuerwehr-Leitstellensystems, bestehend aus einem vernetzten Rechnersystem 1 mit Havarieebene. Das Rechnersystem 1 zeichnet sich durch eine Client-Server-Architektur aus, die eine Erweiterung des Systems jederzeit ermöglicht. Der Server 2 ist zweifach ausgeführt und kommuniziert über ein Netzwerk 3 mit den angeschlossenen Bedienplätzen 4. Die in den einzelnen verfahrenstechnischen Prozessen anfallenden Informationen werden an den im Normalbetrieb aktiven Hauptserver 2a über die über einen Multiplexer 5 angeschlossenen Schnittstellen 6 der verschiedenen verfahrenstechnischen Prozesse weitergeleitet und dort verarbeitet. Die Informationen bzw. Datenbestände des Hauptservers 2a werden auf dem Havarieserver 2b parallel geführt. Der Havarieserver 2b kann durch einen Umschalter 7 aktiviert werden. Dabei werden dann die Schnittstellen 6 mittels des Multiplexers 5 an den Havarieserver 2b angeschlossen, der somit alle Funktionen des Hauptservers 2a übernimmt. Die Bedienplätze 4 sind jeweils mit drei Bildschirmsichtgeräten 8, 9, 10 ausgerüstet, die die funktionsabhängig zusammengeführten, wenigstens teilweise aufbereiteten Informationen des Feuerwehr-Leitstellensystems separat anzeigen. Die Aufteilung der Informationen auf den einzelnen Bildschirmsichtgeräten kann prinzipiell beliebig erfolgen. Selbstverständlich lassen sich die Inhalte der drei Bildschirmsichtgeräte in sogenannter Fenstertechnik auch auf einem Bildschirmsichtgerät darstellen. Beispiele für prinzipielle Aufteilungen der Informationen werden im Zusammenhang mit FIG 2 und 3 näher erläutert. Über in den Bedienplätzen 4 eingebaute Fax-Karten 11 kann eine Bedienperson bei Bedarf ein Fax abschicken, beispielsweise an eine Unterwache. Zur Ausgabe von Meldetexten, Grafiken und dergleichen sind hier an das Rechnersystem 1 Drucker 12 angeschlossen, die ebenfalls über Umschalter 13 in Havariebetrieb arbeiten können. Desweiteren sind an das Rechnersystem 1 des in FIG 1 dargestellten Feuerwehr-Leitstellensystems zusätzliche Rechner 14, beispielsweise zur Datenversorgung, für Wartungszwecke, Eingaben, besondere Leitfunktionen und dergleichen angeschlossen und können teilweise, beispielsweise über eine hier symbolisch angedeutete Funk- oder Telefonverbindung 15, mit anderen Feuerwehr-Leitstellensystemen, Leitzentralen oder Prozeßstationen in Verbindung treten.

FIG 2 zeigt die prinzipielle Konzeption des erfindungsgemäßen Feuerwehr-Leitstellensystems. Wie bereits im Zusammenhang mit FIG 1 erläutert, weist hier ein Bedienplatz 4 drei Bildschirmsichtgeräte 8, 9 und 10 zur separaten Anzeige von funktionsabhängig zusammengeführten und wenigstens teilweise aufbereiteten Informationen des Feuerwehr-Leitstellensystems auf. Wie bereits erläutert repräsentieren die einzelnen Bildschirmsichtgeräte 8, 9 und 10 ganz allgemein jeweils eine Darstellungseinheit 16, die selbstverständlich auch in Fenstertechnik zusammen auf einem Bildschirmsichtgerät zur Anzeige gebracht werden können. Das in FIG 2 dargestellte Feuerwehr-Leitstellensystem weist weitere, speziell für ein Feuerwehr-Leitstellensystem kreierte Darstellungseinheiten 16 auf, die hier verschiedene feuerwehrspezifische Funktionen bzw. Dienstleistungen bereitstellen bzw. realisieren und damit zur Verbesserung der Bedienbarkeit des Feuerwehr-Leitstellensystems beitragen.

Kern des Bedienplatzes 4 sind die auf den Bildschirmsichtgeräte 8, 9 und 10 zur Anzeige gebrachten Darstellungseinheiten 16a, 16b und 16c. Die Darstellungseinheit 16a bildet den Bearbeitungsbildschirm und damit den eigentlichen Bedienplatz. Hier werden über verschiedene Dialog- und/oder Schaltelemente 17 beispielsweise automatische Alarmmeldungen angezeigt, manuelle Meldungen erfaßt, unbearbeitete Ereignisse, in Bearbeitung befindliche Ereignisse und ein dazugehöriges Protokoll angezeigt, die über die Schnittstellen 6 angeschlossenen. verschiedenen technischen Prozesse aktiviert bzw. deaktiviert, oder es können Sonderfunktionen 18, beispielsweise Simulationen zur Ausbildung oder Überprüfung von Bedienpersonal und dergleichen gestartet werden.

Die Darstellungseinheit 16b stellt einen Datenbildschirm bereit, der beispielsweise ereignisbezogene Maßnahmenpläne, Telefon- und Adressenlisten anzeigt und beispielsweise automatisch Maßnahmenpakete vorschlägt, die dann gegebenenfalls auch automatisch eingeleitet werden. Die entsprechenden Maßnahmenpläne, Telefon- und Adressenlisten können selbstverständlich auch - beispielsweise über geeignete, hier nicht dargestellte Dialog- und/oder Schaltelemente 17 - aufgerufen werden.

Auf der auf dem Bildschirmsichtgerät 10 zur Anzeige gebrachten Darstellungseinheit 16c erfolgt beispielsweise die Darstellung von Gebäudegrafiken mit beispielsweise animierten Meldern, Navigationszeichen und dergleichen. So werden zum Beispiel Grundrisse von Gebäuden sichtbar und das Bedienpersonal erkennt, von welcher Stelle ein Alarm ausgelöst wurde. Die Verwendung von Folgegrafiken ermöglicht darüber hinaus eine detaillierte Betrachtung der einzelnen Alarmmeldungen.

Die weiteren Darstellungseinheiten 16d bis 16i können sowohl auf den Bildschirmsichtgeräten 8, 9 und 10 als auch auf den Bildschirmsichtgeräten der Rechner 14 zur Ausführung der entsprechenden, noch zu beschreibenden Funktionen dargestellt werden.

Die Darstellungseinheit 16d stellt einen Nachbearbeitungsbildschirm bereit, mit dem beispielsweise über Dialogund/oder Schaltelemente 17 verschiedene Ereignisse nachbearbeitet, überarbeitet, ein Protokoll erstellt, Ereignisse, beispielsweise für einen Kunden, zusammengefaßt werden können und dergleichen. Die Darstellungseinheit 16e stellt einen Statistikbildschirm bereit, der über verschiedene, individuell vorgebbare, einsatzbezogene Daten, wie beispielsweise Personal, Feuerwehrdienstleistungen, Routine- und/oder Wartungsarbeiten, Ordnungsdienste und dergleichen, beispielsweise jeweils über Dialog- und/oder Schalteinheiten 17, statistische Informationen bereitstellt. Die Darstellungseinheit 16f bildet die Möglichkeit, beispielsweise über verschiedene Dialog- und/oder Schaltelemente 17 verschiedene Berichte über Ereignisse und dergleichen zu erstellen. Dabei besteht beispielsweise die Möglichkeit, Recherchen über Feuerwehreinsätze und Dienstleistungen nebst entsprechenden Auswertungen zu erstellen, als auch Monats-, Gehalts- oder Jahresabrechnungen für die einzelnen Feuerwehren, Kunden oder Mitarbeiter anzufertigen. So läßt sich beispielsweise recherchieren, wann welcher Mitarbeiter an welchem Einsatz beteiligt war und welche Sondervergütungen ihm dafür zustehen. Ebenso können für den Kunden Berichte erstellt werden, die beispielsweise eine Analyse bestimmter Brandcharakteristika zur Verbeugung und dergleichen ermöglichen. Insgesamt werden sämtliche Dienstleistungen von Feuerwehren sowohl für den Kunden als auch für den Betreiber transparent und können damit, beispielsweise zur Reduzierung der Kosten oder Vorbeugung von Schadensereignissen, optimiert werden.

Die Darstellungseinheit 16g stellt einen Versorgungsbildschirm bereit, der es ermöglicht, über verschiedenen Dialogund/oder Schaltelemente 17 Adressenlisten, automatische und/oder manuelle Alarmzuordnungslisten, Maßnahmenlisten und dergleichen zu erstellen. Die Darstellungseinheit 16h stellt einen Parametrierungsbildschirm bereit, der über eine Vielzahl von Dialog und/oder Schaltelementen 17 Zugriff auf sämtliche Informationen des Feuerwehr-Leitstellensystems ermöglicht. Diese können nach vordefinierten Kriterien, zum Beispiel Werkortungsaufgaben, erstellt werden. Mögliche Parametrisierungen sind beispielsweise Tätigkeiten, Einsatzfahrzeuge, Personal- und/oder Kostensätze, Alarmarten, Wege, Fehlalarme, Einsatzarten und dergleichen. Die Darstellungseinheit 16i symbolisiert hier die prinzipielle Möglichkeit, in weiteren Darstellungseinheiten 16 zusätzliche Funktionen und/oder Dienstleistungen anzeigen zu können, beispielsweise einen Bildschirm zum Aufbau von Verbindungen zu anderen Feuerwehr-Leitstellensystemen, Anlagen oder Behörden und so weiter. So könnten beispielsweise bei Krankentransporten deren Krankenkassendaten und dergleichen schon während des Transportes erfaßt, verarbeitet und beispielsweise der Transport direkt mit der entsprechenden Krankenkasse abgerechnet werden.

Die in FIG 2 dargestellten Darstellungseinheiten 16 dienen zur separaten Anzeige der funktionsabhängig zusammengeführten und wenigstens teilweise aufbereiteten, im Feuerwehr-Leitstellensystem anfallenden und vorhandenen Informationen.

Über die Schnittstellen 6 können dem Feuerwehr-Leitstellensystem verschiedene Informationen, beispielsweise Wetterdaten, Gefahrenmeldungen, wie beispielsweise Brandmeldungen und dergleichen oder Meldungen über Löschwasserrückhaltung, gegebenenfalls über weitere Meldegeräte 19 zugeführt werden. Ebenso können, wie bereits erläutert, beispielsweise über den von der Darstellungseinheit 16g bereitgestellten Versorgungsbildschirm oder den von der Darstellungseinheit 16h bereitgestellten Parametrierungsbildschirm sowie über verschiedene Dialog- und/oder Schaltelemente 17 der anderen Darstellungseinheiten 16 Informationen über und für das Feuerwehr-Leitstellensystem in dieses eingegeben werden. Diese werden - wie in FIG 2 dargestellt - in verschiedenen Datenordnern 20 verwaltet, die beispielsweise Grafikdaten von Textdaten und dergleichen trennen. Verschiedene Funktionsmodule 21 führen dann in Abhängigkeit der erforderlichen, beispielsweise über die Darstellungseinheiten automatisch bzw. manuell ausgewählten Funktionen verschiedene Informationen. Dies kann dabei sowohl manuell als auch automatisch erfolgen. Die in den Datenordnern 20 gesicherten Informationen werden dabei sowohl seitens der über die Schnittstellen 6 angeschlossenen unterschiedlichen Meldeeinrichtungen und Prozesse als auch über die Funktionsmodule 21 zur Anzeige auf den jeweiligen Darstellungseinheiten 16 ergänzt, verknüpft und zu gegebenenfalls animierten Symbolelementen transformiert. Die Funktionsmodule 21 schaffen dabei beliebige Verbindungen zwischen den verschiedenen Darstellungseinheiten 16 und deren Dialogund/oder Schaltelementen 17. Die so funktionsabhängig zusammengeführten und wenigstens teilweise aufbereiteten Informationen werden - wie in FIG 2 dargestellt - in entsprechenden Datenordnern 22 gesichert. Desweiteren werden entsprechende Daten in Papierversion als Redundanz in Ordnern 23 gesichert.

FIG 3 zeigt ein Beispiel für eine Darstellungseinheit 16a eines Bearbeitungsbildschirmes. Die hier gezeigte Darstellungseinheit 16a dient zur Einsatzbearbeitung von in einem Feuerwehr-Leitstellensystem eingehenden Schadensereignissen. Die Darstellungseinheit 16a weist verschiedene Dialogelemente 24, 25 und 26 auf. Das unten links angeordnete Dialogelement 24 zeigt die bisher eingegangenen, noch unbearbeiteten Ereignisse und das unten rechts angeordnete Dialogelement 25 die eingegangenen, bereits in Bearbeitung befindlichen Ereignisse an. Das Dialogelement 26 dient zur Protokollierung sämtlicher Ereignisse und zeigt deren Eingangszeit, die jeweils vorzunehmende bzw. vorgenommene Aktion bzw. Maßnahmen und dergleichen an. Über verschiedene Schaltelemente 27, 28 und 29 lassen sich verschiedene Bearbeitungsmöglichkeiten steuern. So können beispielsweise über die Schaltelemente 27 die verschiedenen Einsatzwagen und -gruppen, beispielsweise Rettungswagen, Einsatzlöschwagen oder weitere Wachalarmeinrichtungen, aktiviert werden. Über die Schaltelemente 28 lassen sich weitere, zur Einsatzbearbeitung erforderliche Informationen erstellen-oder korrigieren. So sind beispielsweise Rückmeldungen der einzelnen sich im Einsatz befindlichen Fahrzeuge und Mannschaften einfach per Knopfdruck einholen. Die Schaltelemente 29 dienen zur Bearbeitung des gesamten Einsatzes und erlauben dessen Löschen, Beenden aber auch dessen Ausdrucken oder Faxen, beispielsweise an Unterwachen und dergleichen. Das in der Darstellungseinheit 16a dargestellte Eingabe- und/oder Anzeigefeld liefert automatisch weitere, zur Protokollierung des Einsatzes dienende Informationen, die entweder automatisch angezeigt oder vom Bedienpersonal manuell eingegeben werden. Wie in der Kopfzeile der Darstellungseinheit 16a dargestellt, besteht hier die Möglichkeit, weitere Darstellungseinheiten, beispielsweise die Darstellungseinheiten 16d, 16e, 16f und 16h, zur jeweiligen Bearbeitung aufzurufen.

## Patentansprüche

1. Feuerwehr-Leitstellensystem mit zumindest einem Bildschirmsichtgerät (8 bzw. 9 bzw. 10) auf dem Alarm- bzw. Brandort beschreibende Lage- und Einsatzpläne angezeigt werden, wobei Informationen des Leitsystems funktionsabhängig zusammengeführt, wenigstens teilweise aufbereitet und in diesem Zusammenhang angezeigt werden,
**dadurch gekennzeichnet, daß** zur funktionsabhängigen Zusammenführung der in der Feuerwehrleitstelle anfallenden Informationen verwendet werden
- die Funktion Bearbeitung, beispielsweise zur Anzeige von automatischen Alarmmeldungen und von unbearbeiteten oder sich in Bearbeitung befindlichen Ereignissen, zur Erfassung von manuellen Ereignissen, zur Aktivierung und Deaktivierung der über eine Schnittstelle (6) angeschlossenen verschiedenen technischen Prozesse, sowie zur Anzeige von ereignisbezogenen Maßnahmenplänen und Gebäudegrafiken,
- die Funktion Nachbearbeitung, beispielsweise zur Nachbearbeitung, Überarbeitung und Zusammenfassung von Ereignissen,
- die Funktion statistische Auswertung zur Bereitstellung von statistischen Informationen über verschiedene, individuell vorgebbare, einsatzbezogene Daten,
- die Funktion Recherche und Kostenbestimmung, beispielsweise für die Erstellung von Berichten über Ereignisse, für Recherchen über Feuerwehreinsätze und Dienstleistungen nebst entsprechenden Auswertungen oder für Abrechnungen für die einzelnen Feuerwehren, Kunden oder Mitarbeiter,
wobei diese Funktionen prinzipiell beliebig selektier- und kombinierbar sind.

2. System nach Anspruch 1,
**dadurch gekennzeichnet, daß** die Informationen zur Aufbereitung ergänzt werden.

3. System nach einem oder mehreren der Ansprüche 1 und 2, **dadurch gekennzeichnet, daß** die Informationen zur Aufbereitung symbolisiert werden.

4. System nach Anspruch 3, **dadurch gekennzeichnet, daß** die symbolisierten Informationen animiert werden.

5. System nach einem oder mehreren der Ansprüche 1 bis 4, **dadurch gekennzeichnet, daß** die Informationen automatisch aufbereitet werden.

6. System nach einem oder mehreren der Ansprüche 1 bis 4, **dadurch gekennzeichnet, daß** die Informationen manuell aufbereitet werden.

7. System nach einem oder mehreren der Ansprüche 1 bis 6, **dadurch gekennzeichnet, daß** die aufbereiteten Informationen gesichert werden.

8. System nach einem oder mehreren der Ansprüche 1 bis 7, **dadurch gekennzeichnet, daß** die Informationen akustisch angezeigt werden.

9. System nach einem oder mehreren der Ansprüche 1 bis 8, **dadurch gekennzeichnet, daß** die Informationen optisch angezeigt werden.

10. System nach einem oder mehreren der Ansprüche 1 bis 9, **dadurch gekennzeichnet, daß** die Informationen in Darstellungseinheiten angezeigt werden.

11. System nach einem oder mehreren der Ansprüche 1 bis 10, **dadurch gekennzeichnet, daß** die Informationen in Form von Dialogelementen angezeigt werden.

12. System nach einem oder mehreren der Ansprüche 1 bis 11, **dadurch gekennzeichnet, daß** die Informationen gruppiert angezeigt werden.

## Claims

1. Fire brigade centralised control system with at least one display terminal (8 or 9 or 10) on which site and operational maps describing the location of an alarm or a fire are displayed, whereby information from the control system is gathered on a function-related basis, at least partially edited and displayed in this context, **characterised in that** the following are used for the function-related gathering of the information occurring in the fire brigade control centre
- the processing function, for example for displaying automatic alarm signals and events which are unprocessed or in the course of being processed, for capturing manual events, for activating and deactivating the various technical processes connected via an interface (6), and for displaying event-related action plans and building graphics,
- the post-processing function, for example for post-processing, revising and grouping events,
- the statistical analysis function for provision of statistical information about different, individually definable, operation-related data,
- the search and cost determination function, for example for generating reports of events, for searching by means of fire brigade operations and services together with corresponding analyses or for accounting statements for the individual fire brigades, customers or employees,
whereby these functions can in principle be selected and combined as desired.

2. System according to Claim 1, **characterised in that** the information is supplemented for editing.

3. System according to one or more of Claims 1 and 2, **characterised in that** the information is symbolised for editing.

4. System according to Claim 3, **characterised in that** the symbolised information is animated.

5. System according to one or more of Claims 1 to 4, **characterised in that** the information is automatically edited.

6. System according to one or more of Claims 1 to 4, **characterised in that** the information is manually edited.

7. System according to one or more of Claims 1 to 6, **characterised in that** the edited information is saved.

8. System according to one or more of Claims 1 to 7, **characterised in that** the information is displayed acoustically.

9. System according to one or more of Claims 1 to 8, **characterised in that** the information is displayed optically.

10. System according to one or more of Claims 1 to 9, **characterised in that** the information is displayed in presentation units.

11. System according to one or more of Claims 1 to 10, **characterised in that** the information is displayed in the form of dialogue elements.

12. System according to one or more of Claims 1 to 11, **characterised in that** the information is displayed in grouped form.

## Revendications

1. Système de gestion de corps de sapeurs-pompiers comportant au moins un appareil de visualisation à écran (8 ou 9 ou 10) sur lequel sont affichés des plans de situation et d'intervention décrivant le lieu d'alerte ou d'incendie, des informations du système de contrôle étant réunies selon les fonctions, au moins partiellement traitées et affichées dans ce contexte,
**caractérisé par le fait qu'**on utilise pour la réunion, selon les fonctions, des informations arrivant dans le système de gestion de corps de sapeurs-pompiers :
- la fonction traitement, par exemple pour l'affichage de messages d'alerte automatiques et d'événements non traités ou en cours de traitement, pour la saisie d'événements manuels, pour l'activation et la désactivation des différents processus techniques raccordés via une interface (6) ainsi que pour l'affichage de plans de mesures et de graphiques de bâtiments se rapportant aux événements,
- la fonction post-traitement, par exemple pour le post-traitement, la révision et le résumé d'événements,
- la fonction évaluation statistique pour la fourniture d'informations statistiques sur différentes données pouvant être prescrites individuellement et se rapportant aux interventions,
- la fonction recherche et détermination de coût, par exemple pour l'écriture de rapports sur des événements, pour la recherche sur des interventions et services des corps de sapeurs-pompiers avec les évaluations correspondantes ou pour des comptabilités pour les différents corps de sapeurs-pompiers, clients ou collaborateurs,
ces fonctions pouvant être sélectionnées et combinées en principe de façon quelconque.

2. Système selon la revendication 1,
**caractérisé par le fait que** les informations pour la préparation sont complétées.

3. Système selon une ou plusieurs des revendications 1 et 2,
**caractérisé par le fait que** les informations pour la préparation sont symbolisées.

4. Système selon la revendication 3,
**caractérisé par le fait que** les informations symbolisées sont animées.

5. Système selon une ou plusieurs des revendications 1 à 4,
**caractérisé par le fait que** les informations sont préparées automatiquement.

6. Système selon une ou plusieurs des revendications 1 à 4,
**caractérisé par le fait que** les informations sont préparées manuellement.

7. Système selon une ou plusieurs des revendications 1 à 6,
**caractérisé par le fait que** les informations préparées sont archivées.

8. Système selon une ou plusieurs des revendications 1 à 7,
**caractérisé par le fait que** les informations sont présentées de façon acoustique.

9. Système selon une ou plusieurs des revendications 1 à 8,
**caractérisé par le fait que** les informations sont présentées de façon optique.

10. Système selon une ou plusieurs des revendications 1 à 9,
**caractérisé par le fait que** les informations sont présentées dans des unités de présentation.

11. Système selon une ou plusieurs des revendications 1 à 10,
**caractérisé par le fait que** les informations sont présentées sous forme d'éléments de dialogue.

12. Système selon une ou plusieurs des revendications 1 à 11,
**caractérisé par le fait que** les informations sont présentées sous forme groupée.
